# EUROPÄISCHE PATENTSCHRIFT

(11) **EP 1 641 705 B1**
(45) Veröffentlichungstag und Bekanntmachung des Hinweises auf die Patenterteilung: **14.03.2007**
(21) Anmeldenummer: 04763068.6
(22) Anmeldetag: 01.07.2004
(51) Int. Cl.: B67B 7/18, B01L 9/06, G01N 35/02

(54) **VORRICHTUNG ZUM AUTOMATISCHEN ÖFFNEN UND SCHLIESSEN VON REAKTIONSGEFÄSSEN**
DEVICE FOR THE AUTOMATIC OPENING AND CLOSING OF REACTION VESSELS
DISPOSITIF D'OUVERTURE ET DE FERMETURE AUTOMATIQUE DE RECIPIENTS A REACTION

(30) Priorität: 04.07.2003 DE 20310332 U
(43) Veröffentlichungstag der Anmeldung: 05.04.2006
(60) Teilanmeldung: 06014143.9
(73) Patentinhaber: F.HOFFMANN-LA ROCHE AG, 4070 Basel (CH)
(72) Erfinder: BRUNNER, Wolfgang, 85560 Ebersberg (DE)
(74) Vertreter: Ganahl, Bernhard
(86) Internationale Anmeldenummer: PCT/EP2004/007179
(87) Internationale Veröffentlichungsnummer: WO 2005/002728

(56) Entgegenhaltungen:
- US-A- 4 674 340
- US-A- 5 533 407
- US-A1- 2003 118 487

## Beschreibung

Die Erfindung betrifft eine Vorrichtung zum automatischen Öffnen und Schließen von Reaktionsgefäßen, insbesondere betrifft die Erfindung eine Vorrichtung zum automatischen Öffnen und Schließen von Reaktionsgefäßen mit auf die Reaktionsgefäße schraubbaren Deckel. Die Erfindung soll insbesondere für Anwendungen in einem Roboter zur Durchführung chemischer und/oder biologischer Reaktionen geeignet sein.

Es sind Vorrichtungen zum automatischen Öffnen und Schließen von Reaktionsgefäßen bekannt, die einen Greifer aufweisen, der zum Greifen eines Deckels betätigbar ist und mit einem Drehmechanismus versehen ist, so dass mittels des Greifers der Deckel auf ein Reaktionsgefäß bzw. von einem Reaktionsgefäß geschraubt werden kann. Die Reaktionsgefäße haben meistens eine spezielle Form, so dass sie formschlüssig in einen entsprechenden Aufnahmebereich in einer Halterung eingreifen. Hierdurch wird eine drehfeste Anordnung des Reaktionsgefäßes sichergestellt.

Aus der US 6,216,340 B1 ist eine ähnliche Vorrichtung bekannt, bei welcher die Reaktionsgefäße in einer bestimmten Zone vertikale Rippen besitzen, so dass sie in einem Aufnahmeelement formschlüssig eingreifen können. Hierdurch wird eine drehfeste Anordnung der Reaktionsgefäße gewährleistet. Der Deckel dieser Reaktionsgefäße ist mit zwei horizontalen Schlitzen ausgebildet, die im Deckelkörper am oberen Bereich diametral gegenüber liegend angeordnet sind. Diese Schlitze münden jeweils mit einem Ende an der Oberseite des Deckels, so dass ein Deckelgreifmechanismus mittels eines horizontalen Stiftes in die Schlitze eingreifen kann und auf den Deckel das notwendige Drehmoment ausüben kann, um ihn vom Reaktionsgefäß abzuschrauben. Für diesen Greifer ist es vorteilhaft, dass er nicht mit einem speziellen Betätigungsmechanismus zum aktiven Greifen der Deckel versehen ist, sondern lediglich passiv durch Eingreifen der Stifte in die Schlitze den Deckel greifen kann. Dies erleichtert die Integration in einen Roboter, da dadurch eine zusätzliche Steuerfunktion wegfällt. Jedoch ist bei dieser Vorrichtung nachteilig, dass nur besonders ausgebildete Deckel verwendet werden können. Man kann somit nicht von einem Kunden erhaltene und mit einem herkömmlichen Deckel verschlossene Reaktionsgefäße ohne Wechseln des Deckels in einen Produktionsprozess mit einer solchen Vorrichtung zum automatischen Öffnen und Schließen von Reaktionsgefäßen einführen. Hierzu wäre es notwendig, einen herkömmlichen Deckel durch einen derart speziell ausgestalteten Deckel auszutauschen. Zudem sind diese speziellen Dekkel teuer.

US 5,533,407 offenbart eine Anordnung zur Probenentnahme flüssiger Proben, die in mit Schraubkappen abgedichteten Bechern enthalten sind. Dazu enthält die Anordnung ein Greifermodul zum motorbetätigten Greifen und Halten des Bechers und ein Modul zum Öffnen und Schliessen der Becher. Zum Öffnen eines Bechers wird dieser vom Greifermodul gehalten, dann betätigt ein Motor Greifzangen, deren Nasen die Kappe umgreift. Durch relative Drehung des Greifermoduls und der Greifzangen zueinander wird die Kappe gelöst. Nach einer Probenentnahme wird die Kappe durch entgegengesetzte Drehung wieder aufgesetzt, und die Greifzangen werden durch Betätigen des Antriebsmotors gelöst.

US 4,674,340 offenbart ein System zum Bestimmen eines Drehmoments, das benötigt wird, um eine auf einem Behälter befindliche Schraubkappe zu entfemen. Dazu wird ein Aufsatz offenbart, welcher eine sich nach innen verjüngende Öffnung besitzt, in der Längsrillen eingelassen sind. Die Längsrillen dienen dazu, sich zwischen die Kerben der längsgerippten Schraubkappe zu setzen, um so eine relative Drehung zwischen der Schraubkappe und dem Aufsatz zu verhindern.

US 2003/0118487 A1 beschreibt eine Vorrichtung zum Aufschrauben von Deckeln. Ein Aufsatz der Vorrichtung besitzt eine sich nach innen verjüngende Öffnung, in der eine Vielzahl von meisselähnlichen inneren Längskanten eingelassen ist, die bei Aufsetzen auf die Schraubkappe in einen immer stärkeren Kontakt mit der Schraubkappe kommen. Durch die sich ergebende mehrfache linienförmige Quetschverbindung kann die Kappe durch Drehung gelöst werden.

Der Erfindung liegt deshalb die Aufgabe zugrunde, eine Vorrichtung zum automatischen Öffnen und Schließen von Reaktionsgefäßen zu schaffen, die einfach ausgebildet ist und dennoch in einfacher Art und Weise sicher herkömmliche, schraubbaren Deckel zum Öffnen und Schließen von Reaktionsgefäßen greift.

Diese Aufgabe wird durch eine Vorrichtung mit den Merkmalen des Anspruchs 1 gelöst.

Vorteilhafte Ausgestaltungen der Erfindung sind in den jeweiligen Unteransprüchen angegeben.

Die erfindungsgemäße Vorrichtung zum automatischen Öffnen und Schließen von Reaktionsgefäßen umfasst
- eine Halteeinrichtung zum verdrehsicheren Halten von zumindest einem Reaktionsgefäß,
- einen Greifer zum Greifen eines Deckels für das Reaktionsgefäß, wobei der Greifer Greifbacken zum Umfassen des Deckels aufweist, und
- einen Drehmechanismus zum drehbaren Halten des Greifers.

Die erfindungsgemäße Vorrichtung zeichnet sich dadurch aus, dass die Greifbacken derart angeordnet sind, dass beim Einführen des Deckels in den Bereich zwischen den Greifbacken dieser von den Greifbacken durch Reibschluss gehalten wird, und der Greifer keine aktive Betätigungseinrichtung zum Öffnen und Schließen der Greifbacken aufweist.

Der Deckel wird somit im wesentlichen durch den Reibschluss zwischen den Greifbacken und dem Deckel gehalten. Es ist kein zusätzlicher Stellmechanismus zum Betätigen der Greifbacken notwendig und auch nicht vorgesehen. Trotzdem können herkömmliche Deckel mit dem Greifer umgriffen werden, ohne dass die Deckel hierzu besonders ausgestaltet sein müssen.

Nach einer bevorzugten Ausgestaltung der Erfindung weisen die Greifbacken an ihren Greifflächen zumindest einen quer zur Drehrichtung verlaufenden Schneidsteg auf. Dieser Schneidsteg besitzt eine scharfe Schneidkante, die an der Oberfläche des Deckels eingreift und so die Übertragung erheblicher Drehmomente vom Greifer auf den Deckel erlaubt.

Nach einer bevorzugten Ausgestaltung der Erfindung weist die Halteeinrichtung ferner drei übereinanderliegend angeordnete Lochplatten auf, in welchen Öffnungen zum Aufnehmen der Reaktionsgefäße ausgebildet sind, wobei die obere und die untere Lochplatte ortsfest mit den darin ausgebildeten Öffnungen zueinander fluchtend angeordnet sind, und die mittlere Lochplatte verschieblich zwischen einer ersten Position, in der deren Öffnungen mit den Öffnungen der oberen und unteren Lochplatten fluchten, und einer zweiten Position ausgebildet ist, in der deren Öffnungen zu den Öffnungen der oberen und unteren Lochplatten etwas außer Flucht angeordnet sind, so dass ein in die Öffnungen der Lochplatten eingebrachtes Reaktionsgefäß verdrehsicher geklemmt ist, und dass Mittel zum Fixieren der mittleren Lochplatte in der zweiten Position vorgesehen sind.

Ein oder mehrere Reaktionsgefäße können in entsprechende Öffnungen in den Lochplatten eingebracht werden und durch Verschieben der mittleren Lochplatte in die zweite Position in den Lochplatten verdrehsicher geklemmt werden, wobei durch das Fixieren der mittleren Lochplatte in der zweiten Position die Reaktionsgefäße entsprechend gehalten werden.

Ein Vorteil der erfindungsgemäßen Vorrichtung bei Kombination des
- Haltens der Deckel mit Reibschluss, und
- Haltens der Reaktionsgefäße durch Klemmen,
ergibt sich daraus, dass das Klemmen der Reaktionsgefäße auch eine vertikale Bewegung der Reaktionsgefäße verhindert und so ein Verschieben der Reaktionsgefäße beim Aufschieben des Greifers auf den Deckel bzw. beim Abheben des Deckels vom Reaktionsgefäß verhindert. Das Klemmen der Reaktionsgefäße erfüllt somit zwei Funktionen, nämlich das drehsichere Halten der Reaktionsgefäße beim Auf- und Abschrauben der Deckel und die Aufnahme der Kräfte beim Aufschieben des Greifer, Abziehen des Deckels bzw. beim Abziehen des Greifers nach dem Aufschrauben des Deckels.

Durch das klemmende Halten der Reaktionsgefäße ist die Reibungskraft, mit welcher der Greifer auf einen Deckel aufgeschoben wird, alleine durch die mechanischen Eigenschaften der Einrichtung, mit welchen der Greifer bewegt wird, begrenzt. Das klemmende Halten erlaubt somit die Einstellung beträchtlicher Reibungskräfte zum Aufschieben des Greifers.

Bei einer bevorzugten Ausführungsform ist in den Öffnungen der mittleren Lochplatte jeweils ein in den Innenbereich der Öffnung vorstehender Vorsprung ausgebildet, der etwa am Schnittbereich zwischen einer in Verschieberichtung verlaufenden Mittellinie der jeweiligen Öffnung und dem Rand der Öffnung angeordnet ist. Beim Klemmen der Reaktionsgefäße in den Lochplatten wird dieser Vorsprung an die Wandung der Lochplatte gedrückt, so dass eine formschlüssige Halterung der Reaktionsgefäße bewerkstelligt wird.

Vorzugsweise sind die obere und/oder untere Lochplatte einer Öffnung jeweils mit entsprechenden Vorsprüngen ausgebildet, die an der Öffnung diametral gegenüber liegend zu den Vorsprüngen der mittleren Lochplatte angeordnet sind. Dies erhöht den Formschluss, mit welcher die Reaktionsgefäße in den Lochplatten gehalten werden.

Die Erfindung wird nachfolgend näher anhand der Zeichnung erläutert. In den Zeichnungen zeigen:
- Fig. 1: einen Roboter mit einer erfindungsgemäßen Vorrichtung zum automatischen Öffnen und Schließen von Reaktionsgefäßen,
- Fig.2a: einen erfindungsgemäßen Greifer in perspektivischer Ansicht,
- Fig. 2b: den Greifer aus Fig. 2a in einer Schnittansicht,
- Fig. 3a: einen weiteren erfindungsgemäßen Greifer in perspektivischer Ansicht,
- Fig. 3b: den Greifer aus Fig. 3a in einer Schnittansicht,
- Fig. 4a: ein Gestell zum Halten von Reaktionsgefäßen zusammen mit einem Thermoblock und einer Rütteleinrichtung,
- Fig. 4b: die Anordnung aus Fig. 4a in der der Draufsicht,
- Fig. 4c: die Anordnung aus Fig. 4a im Teilschnitt,
- Fig. 5a: eine Lochplatte des Gestells aus Fig. 4a in der Draufsicht,
- Fig. 5b: eine Öffnung der Lochplatte in vergrößerter Darstellung,
- Fig. 6a: ein Reaktionsgefäß mit Deckel in einer Seitenansicht, und
- Fig. 6b: das Reaktionsgefäß und der Deckel aus Fig. 6a in perspektivischer Ansicht.

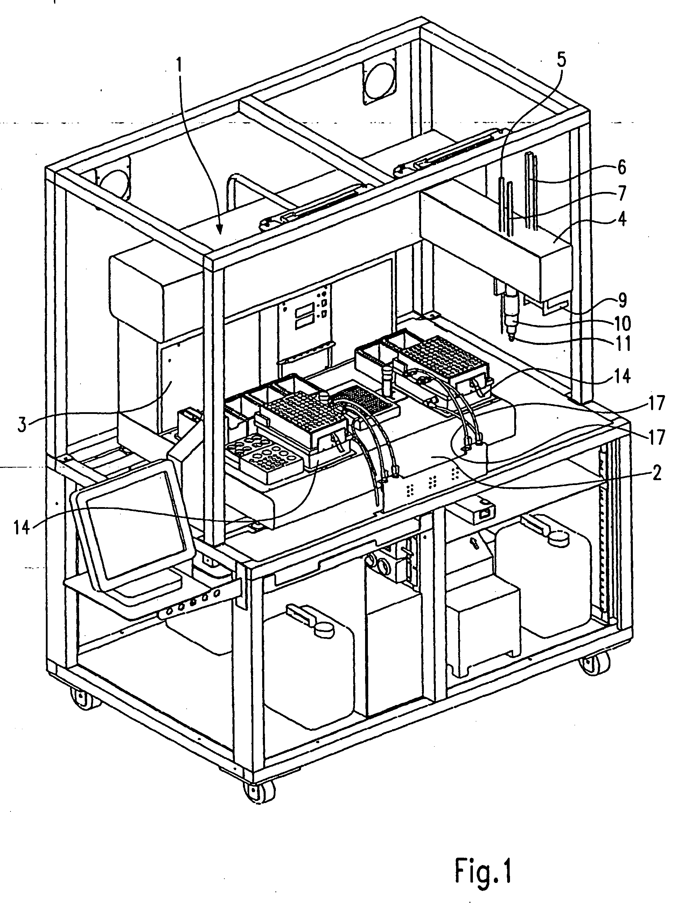

Die erfindungsgemäße Vorrichtung zum automatischen Öffnen und Schließen von Reaktionsgefäßen ist zur Anwendung in einem Roboter ausgebildet. Ein solcher Roboter ist schematisch in Fig. 1 dargestellt. Der Roboter 1 weist eine Arbeitsplattform 2, eine Rückwand 3 und einen Roboterarm 4 auf. Der Roboterarm 4 ist entlang einer am oberen Randbereich der Rückwand 3 horizontal angeordneten Schiene (nicht dargestellt) verfahrbar, so dass er den gesamten Bereich der Arbeitsplattform 2 abstreichen kann. Am Roboterarm sind drei Handhabungsarme 5, 6, 7 angeordnet, die sich in vertikaler Richtung erstrecken. Die Handhabungsarme sind auf sich im Roboterarm 4 erstreckenden Schienen (nicht dargestellt) verfahrbar gelagert, so dass sie in Längsrichtung des Roboterarmes 4 verfahrbar sind. Die Handhabungsarme sind auch in vertikaler Richtung verfahrbar. Der Handhabungsarm 5 weist eine Pipettierspitze zum Pipettieren von chemischen und/oder biologischen Reagenzien auf. Der Handhabungsarm 6 ist mit einem gabelförmigen Greifelement 9 versehen, mit welchem Mikrotiterplatten gehandhabt werden können. Der Handhabungsarm 7 weist an seinem unteren Ende einen Drehmechanismus 10 auf, an dem ein Greifer 11 zum Greifen von Deckel 12 für Reaktionsgefäße 13 gekoppelt ist. Der Greifer 11 wird unten näher erläutert.

Auf dem Roboter sind diverse Arbeitsstationen vorgesehen, wobei ein solcher Roboter je nach Bedarf eines Anwenders unterschiedlich konfigurierbar ist. Im vorliegenden Ausführungsbeispiel sind auf der Arbeitsplattform 2 zwei Rüttelstationen mit jeweils einer Rütteleinrichtung 14 vorgesehen, an welchen jeweils ein Thermoblock 15 zum Aufnehmen von Reaktionsgefäßen angeordnet ist. Der Thermoblock 15 ist ein quaderförmiger Körper, aus gut wärmeleitendem Material, in dem Kanäle zum Durchleiten eines temperierten Wärmemediums, wie zum Beispiel von Silikonöl, ausgebildet sind. An der oberen Seitenfläche des Thermoblocks 15 sind Ausnehmungen ausgebildet, in welche der untere Bereich der Reaktionsgefäße 13 formschlüssig aufgenommen wird, so dass ein guter Wärmeübergang zwischen dem Thermoblock 15 und den Reaktionsgefäßen hergestellt wird. Auf diesen den Thermoblock 15 aufweisenden Rütteleinrichtungen 14 ist jeweils Gestell 16 angeordnet, das zum Handhaben eines Satzes von Reaktionsgefäßen 13 dient. Dieses Gestell wird unten näher erläutert.

Der Roboter dieses Ausführungsbeispiels ist zur Direktquantifizierung der RNA des Hepatitis-C Virus (HCV RNA) im Serum oder Plasma HCV-infizierter Personen mittels des VERSANT^{™} HCV RNA 3.0 Essay (bDNA) beziehungsweise zur Direktquantifizierung der RNA des humanen Immunschwächenvirustyp I (HIV-I) im Plasma mit von HIV-I infizierten Personen mittels des VERSANT^{™} HIV-I RNA 3.0 Essay (bDNA) vorgesehen. Diesbezüglich wird auf die US-Patente US 4,868,105, US 5,635,352 und US 5,681,702 und das europäische Patent EP 225 807 B verwiesen. Bei dem in Fig. 1 gezeigten Ausführungsbeispiel ist der Roboter 1 in einem Laborschrank angeordnet, wobei im Bereich unterhalb des Roboters eine Einheit zum Temperieren und Umwälzen des Wärmemediums vorgesehen ist. Das Wärmemedium wird in dieser Einheit mittels Schläuchen 17 den Thermoblöcken zu- und abgeführt.

Weiterhin weist die Arbeitsplattform 2 einen Vorratsbehälter für Einweg-Pipettenspitzen und einen Behälter für gebrauchte Pipettenspitzen auf. Bei einem solchen Roboter 1 können auch weitere Arbeitsstationen integriert werden, wobei zum Beispiel ein Thermocycler. Bezüglich weiterer Konfigurationen und den allgemeinen Aufbau eines solchen Roboters wird auf die WO 99/26070 Bezug genommen. Somit ist die durch die Greifbacken 20 begrenzte Öffnung, in welcher ein Deckel aufgenommen werden soll, mittels der Stellschrauben 23 in einem gewissen Bereich einstellbar.

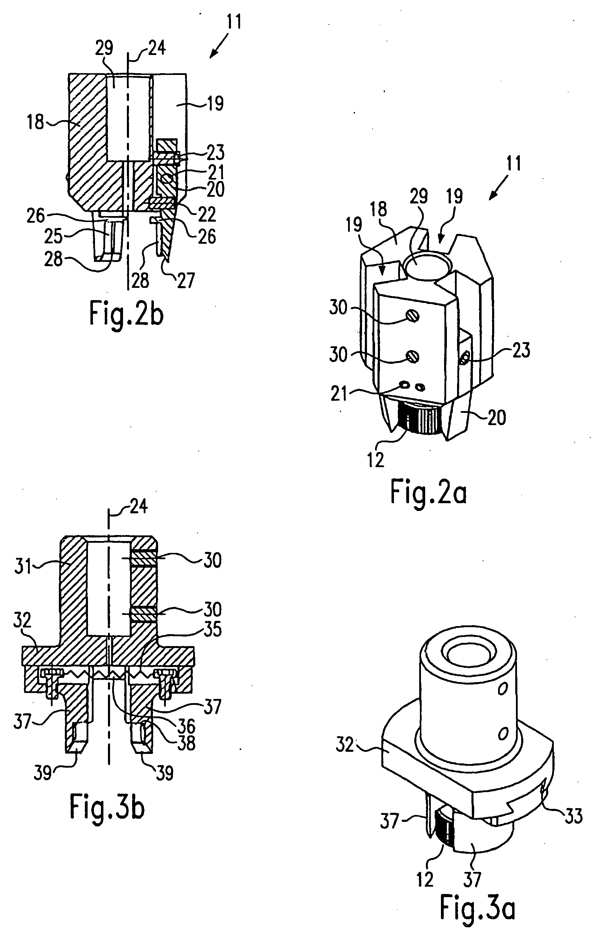

In Fig. 2a und 2b ist ein erstes Ausführungsbeispiel des erfindungsgemäßen Greifers 11 gezeigt. Dieser Greifer 11 weist einen etwa prismenförmigen Grundkörper 18 mit einer regelmäßigen sechseckigen Grundfläche und einer entsprechenden Deckfläche auf. In den Grundkörper 18 sind drei vertikal verlaufende Nuten 19 an jeweils alternierenden Seitenwandungen eingebracht. In jeder Nut 19 lagert jeweils eine Klemmbacke 20, die am Grundkörper 18 ein Stück nach unten vorsteht. Die Greifbacken 20 werden jeweils von einer Achse 21 durchgriffen, die am Grundkörper 18 befestigt sind.

Zwischen den Greifbacken 20 und dem Grundkörper 18 ist jeweils ein Federelement 22 im Bereich unterhalb der Achsen 21 angeordnet, so dass die Greifbacken 20 mit ihren unteren Enden nach außen gedrückt werden. Oberhalb der Achsen 21 ist in den Greifbacken 20 jeweils eine Gewindebohrung eingebracht, in die ein Stellschraube 23 eingeschraubt ist, mit dem der Abstand des unteren Endes der jeweiligen Klemmbacke 20 von einer vertikalen Symmetrieachse 24 einstellbar ist.

An dem unterhalb des Grundkörpers 18 vorstehenden Bereich weisen die Greifbakken 20 jeweils eine zur Symmetrieachse 24 des Greifers 11 weisende Greiffläche 25 auf. Die Greiffläche 25 ist nach oben jeweils durch einen horizontalen Anschlagsteg 26 begrenzt. Am unteren Randbereich der Greiffläche 25 schließt sich ein nach unten und radial nach außen verlaufende Einführschräge 27 an.

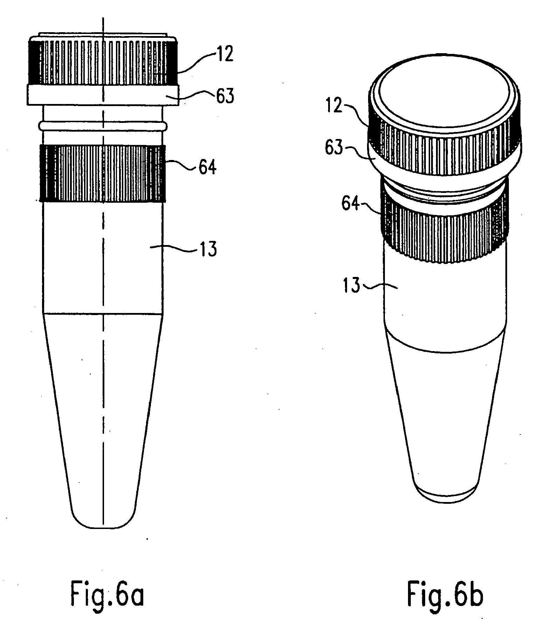

An den Greifflächen 25 ist jeweils zumindest ein vertikal verlaufender Schneidsteg 28 ausgebildet. Im vorliegenden Ausführungsbeispiel ist auf jeder Greiffläche 25 jeweils ein Schneidsteg 28 vorgesehen. Im Rahmen der Erfindung können jedoch auch mehrere Schneidstege pro Greiffläche ausgebildet sein. Die Höhe, mit der die Schneidstege 28 an der Greiffläche 25 vorstehen, ist kleiner als die Wandstärke eines Reaktionsgefäßes 13 (Fig. 6a, 6b). Im vorliegenden Ausführungsbeispiel beträgt diese Höhe 0,5 mm. Die Schneidstege 28 sind jeweils ausgehend von der Greiffläche 25 spitz zulaufend ausgebildet, so dass sie eine vertikal verlaufende Schneidkante bilden.

Die erfindungsgemäße Vorrichtung ist zum Handhaben von Reaktionsgefäßen des Typs "Microtube 1.5 ml" von der Firma Sarstedt vorgesehen, die unter der Artikelbezeichnung SAR-72692 beziehungsweise SAR-62692005 vertrieben werden (www.scirnart.com/tubes/screwcap.html).

An der oberen Deckfläche des Grundkörpers 18 mündet ein mittig angeordnete Sacklochbohrung 29. Der Greifer 11 kann mit der Sacklochbohrung 29 auf einen drehbar angetriebenen Stift des Drehmechanismus 10 aufgeschoben und mittels zweier Fixierschrauben 30 am Drehmechanismus 10 fixiert werden.

Im Ausgangszustand begrenzen die drei Greifbacken 20 mit ihren Greifflächen 25 einen Bereich, der geringfügig kleiner als der Umfangbereich eines zu greifenden Deckels 12 ist. Der durch die unteren Kanten der Einführschrägen 27 begrenzte Bereich ist etwas größer als der Umfangbereich eines Deckels 12. Wird somit der Greifer 11 auf einen Deckel 12 aufgeschoben, so wird der Deckel etwas elastisch verformt und in den Bereich zwischen den Greifbacken 20 eingeführt, bis er an den Anschlagstegen 26 anliegt. Durch den Reibschluss zwischen den Greifflächen 25 und der Deckelmantelwandung wird der Deckel vom Greifer 11 gehalten, so dass er gehandhabt werden kann. Zusätzlich kerben die Schneidstege 28 die Deckelmantelwandung etwas ein und erzeugen einen Formschluss, wodurch ein erhebliches Drehmoment vom Greifer 11 auf den Deckel 12 übertragen werden kann.

Fig. 3a und 3b zeigen ein zweites Ausführungsbeispiel des erfindungsgemäßen Greifers 11. Im oberen Bereich weist dieser Greifer 11 einen rohrförmigen Abschnitt 31 auf, in dem zwei Gewindebohrungen zum Einbringen von Fixierschrauben 30 vorgesehen sind, um den Greifer 11 an einem drehbar angetriebenen Stift des Drehmechanismus 10 zu fixieren. Am unteren Ende des rohrförmigen Abschnittes 31 ist ein horizontal verlaufendes Schienenteil 32 ausgebildet. An der Unterseite dieses Schienenteils 32 ist eine schwalbenschwanzförmige Nut 33 ausgebildet.

In der schwalbenschwanzförmigen Nut 33 lagern verschieblich zwei Greifbacken 34, die mittels eines Federelementes 35 derart miteinander verbunden sind, dass die Greifbacken 34 in Richtung zur Symmetrieachse 24 vorgespannt sind. Im Bereich zwischen den beiden Greifbacken 34 ist ein Abstandselement 36 vorgesehen, an dem die Greifbacken 34 im Ausgangszustand, das heißt ohne Deckel, wegen der Vorspannung des Federelementes 35 anliegen.

Die Greifbacken 34 besitzen jeweils einen kreissegmentförmigen Körper, wobei der Kreissegment-Mittelpunkt in der Nähe der Symmetrieachse 24 liegt. Im unteren Drittel ist an der Innenfläche der Greifbacken 34 ein Abschnitt ausgefräst, so dass die Greifbacken 34 in diesem Bereich eine zur Symmetrieachse 24 weisende Greiffläche 37 besitzen, die nach oben durch eine Anschlagstufe 38 begrenzt ist. Am unteren Randbereich der Greifflächen 37 schließt sich jeweils eine nach unten radial nach außen verlaufende Einführschräge 39 an.

An den Greifflächen 37 ist jeweils zumindest ein vertikal verlaufender Schneidsteg 28 ausgebildet. Im vorliegenden Ausführungsbeispiel sind drei Schneidstege pro Greiffläche 37 vorgesehen. Die Ausbildung der Schneidstege entspricht dem ersten Ausführungsbeispiel des Greifers 11.

Im Ausgangszustand begrenzen die zwei Greifbacken 34 mit ihren Greifflächen 37 einen Bereich, der etwas kleiner als der Umfangbereich eines zu greifenden Deckels 12 ist. Der durch die unteren Kanten der Einführschrägen 39 begrenzte Bereich ist etwas größer als der Umfangbereich eines Deckels 12. Wird somit der Greifer 11 auf einen Deckel 12 aufgeschoben, so werden entgegen der Federwirkung des Federelementes 35 die Greifbacken 34 durch das Einführen des Deckels 12 an den Einführschrägen 39 auseinandergeschoben und der Deckel in dem Bereich zwischen den Greifbacken 34 eingeführt, bis er an den Anschlagstufen 38 anliegt. Durch einen Reibschluss zwischen den Greifflächen 37 und der Deckelmantelwandung wird der Deckel 12 vom Greifer 11 gehalten, so dass er gehandhabt werden kann. Die Schneidstege 28 erzeugen wiederum einen Formschluss zur Übertragung eines beträchtlichen Drehmomentes.

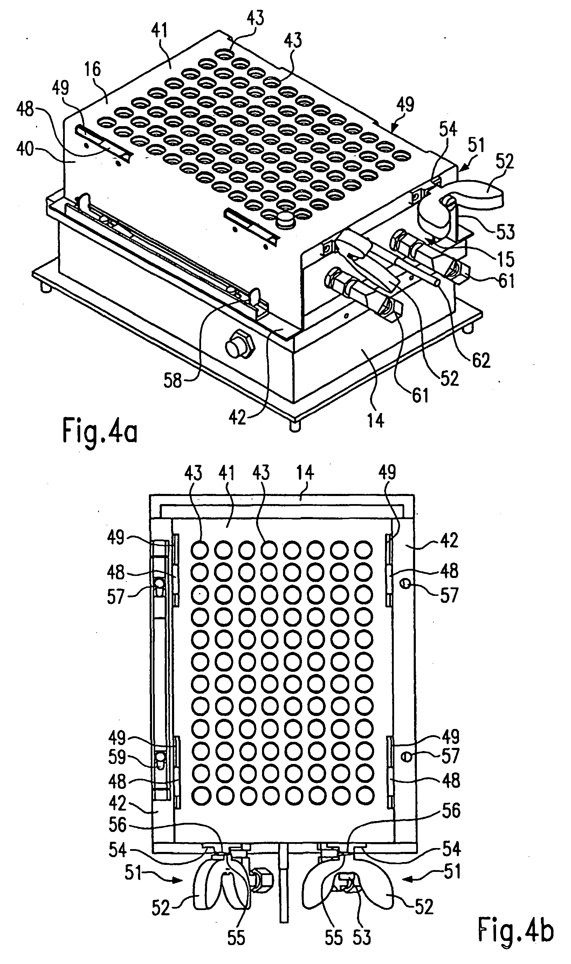

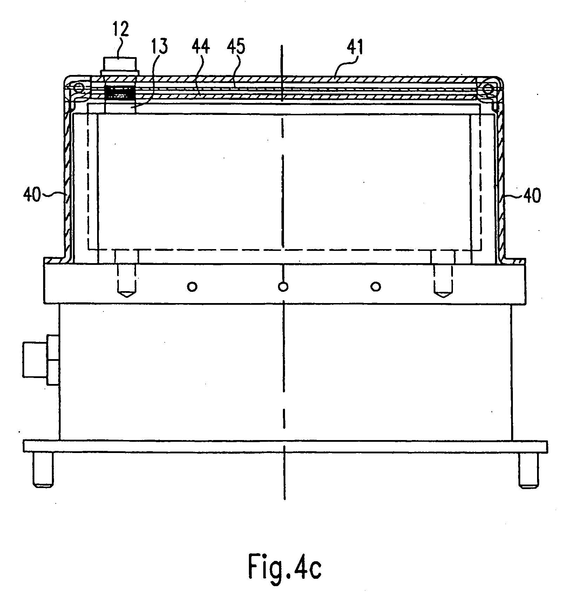

Nachfolgend wird die Halteeinrichtung, oder das Gestell, 16 zum Aufnehmen der Reaktionsgefäße näher erläutert (Fig. 4a, 4b. 4c). Dieses Gestell 16 ist umgekehrt u-förmig ausgebildet mit zwei Seitenwandungen 40 und einer Deckenwandung 41. Die Seitenwandungen sind jeweils nach außen umgebogen, so dass ein schmaler, streifenförmiger Fußabschnitt 42 nach außen vorstehend ausgebildet ist. Die Deckenwandung 41 ist als Lochplatte ausgebildet, wobei in einem regelmäßigen Raster Öffnungen 43 zum Aufnehmen von Reaktionsgefäßen eingebracht sind. Unterhalb der Deckenwandung 41 ist in einem vorbestimmten Abstand, zum Beispiel 5 bis 10 mm, eine weitere Lochplatte, die nachfolgend als untere Lochplatte 44 bezeichnet wird, angeordnet. Die untere Lochplatte 44 ist mit ihren an den Seitenwandungen 40 angrenzenden Randbereichen nach unten gebördelt und die gebördelten Abschnitte sind an den Seitenwandungen 40 beispielsweise durch Löten oder mittels Schraubverbindungen befestigt. Die Dekkenwandung 41, die nachfolgend auch als obere Lochplatte 41 bezeichnet wird, und die untere Lochplatte 44 begrenzen somit einen Zwischenraum, in dem eine weitere Lochplatte 45 angeordnet ist, die im folgenden als mittlere Lochplatte bezeichnet wird.

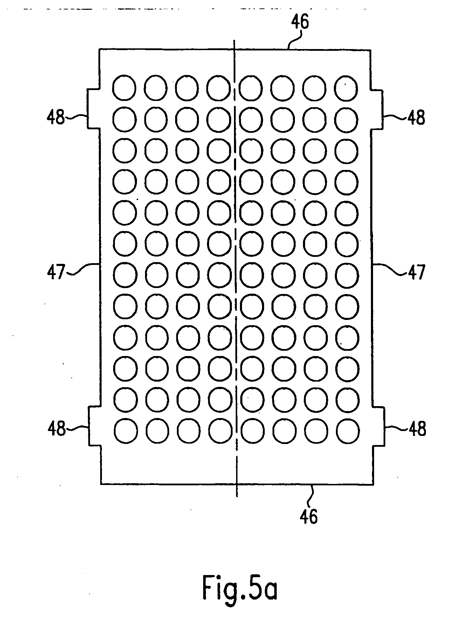

Die Lochplatte 45 ist in der Draufsicht in Fig. 5a dargestellt. Diese Lochplatte ist in der Draufsicht im wesentlichen rechteckförmig mit zwei Stirnkanten 46 und zwei Längskanten 47 ausgebildet. An den Längskanten 47 sind jeweils zwei Nasen 48 angeformt. Die Nasen 48 greifen in entsprechende Schlitze 49 in den Seitenwandungen 40 (Fig. 4a) ein. Die Schlitze 49 sind länger als die Nasen 48, so dass die mittlere Lochplatte 45 in Richtung ihrer Längskante 47, die eine Verschieberichtung festlegen, verschieblich gelagert ist.

Auch die mittlere Lochplatte 45 weist Öffnungen 43 auf, die im wesentlichen in der gleichen Form, Größe und im gleichen Raster wie die Öffnungen 43 der oberen und der unteren Lochplatte 41, 44 ausgebildet sind.

Die Öffnungen der oberen und unteren Lochplatte 41, 44 sind in geradliniger Projektion exakt übereinander angeordnet. Die mittlere Lochplatte 45 kann in eine erste Position verschoben werden, in der die Öffnungen aller drei Lochplatten exakt übereinander angeordnet sind, das heißt, die korrespondierenden Öffnungen der drei Lochplatten fluchten zueinander. Die mittlere Lochplatte 45 kann in eine zweite Position verschoben werden, in der deren Öffnungen bezüglich der Öffnungen der unteren und oberen Lochplatte 41, 44 versetzt sind, so dass die Öffnungen nicht mehr in Flucht zueinander sind.

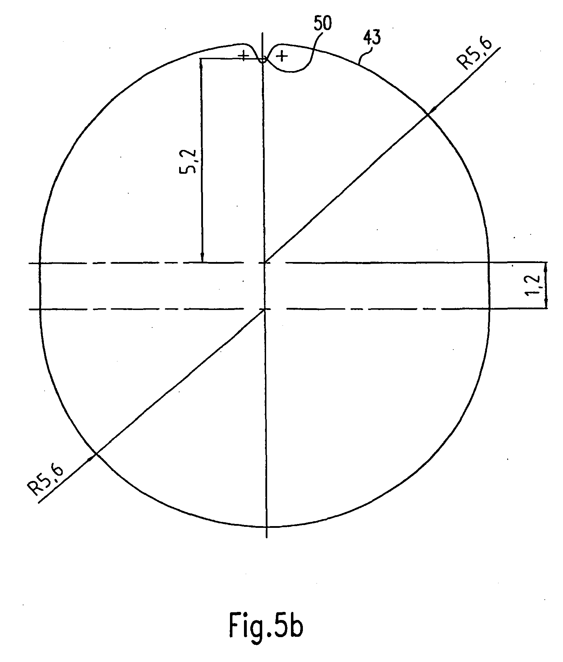

Die Öffnungen 43 (Fig. 5b) sind in Verschieberichtung etwas gestreckt und weisen die Form von zwei Halbkreissegmenten auf, die ein Stück voneinander entfernt sind. Im vorliegenden Ausführungsbeispiel besitzen die Halbkreissegmente einen Radius von 5,6 mm und sind um 1,2 mm auseinander gerückt. Am Scheitelpunkt eines der beiden Halbkreissegmente ist ein kleiner, in den Bereich der Öffnung vorstehender Vorsprung 50 ausgebildet. Dieser Vorsprung ist somit am Schnittbereich zwischen einer in Verschieberichtung verlaufenden Mittellinie der Öffnung 43 und dem Begrenzungsrand der Öffnung angeordnet. Die Vorsprünge 50 weisen in der Draufsicht nur Rundungen und kein Ecken auf, damit sie die Reaktionsgefäße nicht perforieren.

Die Öffnungen aller drei Lochplatten 41, 44, 45 weisen entsprechende Vorsprünge 50 auf, wobei die Vorsprünge der oberen und unteren Lochplatte 41, 44 an den Öffnungen jeweils zu den Vorsprüngen der mittleren Lochplatte diametral gegenüberliegend angeordnet sind.

An einer Stirnseite des Gestells 16 sind zwei Stelleinrichtungen 51 angeordnet, mit welchen die mittlere Lochplatte in Verschieberichtung zwischen der ersten und zweiten Position hin und her bewegt werden kann und in der zweiten Position fixiert werden kann. Diese Stelleinrichtungen 51 weisen jeweils eine Flügelschraube 52 auf. Die Flügelschrauben 52 besitzen eine mittige Bohrung, in der eine mit der mittleren Lochplatte 45 verbundene Stange lagert. Diese Stange weist in Längsrichtung eine Gewindebohrung auf, in die eine Schraube 53 eingeschraubt ist, die mit ihrem Schraubenkopf auf den Flügelschrauben 52 aufliegt. An der zu den Lochplatten weisenden Seite liegen die Flügelschrauben an jeweils einem korrespondierenden Anschlagelement 54 an, die mit der oberen und unteren Lochplatte 41, 44 fest verbunden sind. Die Anschlagelemente 54 werden jeweils von der mit der mittleren Lochplatte verbundenen Stange durchgriffen. Die Anschlagelemente 54 und die Flügelschrauben 52 weisen jeweils eine Kontaktfläche 55, 56 auf.

Die Flächen 55, 56 sind in einem spitzen Winkel zu einer zur Bewegungsrichtung senkrecht angeordneten Ebene angeordnet. Zwischen den Anschlagelementen 54 und der mittleren Lochplatte 45 ist ein Federelement (nicht dargestellt) vorgesehen, das die Lochplatte 45 weg von den Anschlagelementen 54 drückt. Liegen die Flügelschrauben 52 mit ihren Kontaktflächen 55 flächig an den Kontaktflächen 56 der Anschlagelemente 54 an, so befindet sich die mittlere Lochplatte in der maximal entfemten Position bezüglich der Anschlagelemente 54. Mittels der Schrauben 53 wird diese Position derart eingestellt, dass hier die Öffnungen 43 der mittleren Lochplatte 45 zu den Öffnungen 43 der oberen und unteren Lochplatte 41, 44 fluchten. Werden nun die Flügelschrauben 52 um 180° gedreht, so bewirken die schrägen Kontaktflächen einen Versatz der Flügelschrauben 52 bezüglich der Anschlagelemente 54, wodurch die mittlere Lochplatte 45 entgegen der Federwirkung des Federelementes in Richtung zu den Anschlagelementen 54 bewegt wird und ihre zweite Position einnimmt, in der deren Öffnungen 43 versetzt zu den Öffnungen der oberen und unteren Lochplatte 41, 44 sind. Die Kontaktflächen 55, 56 sind mit einer kleinen Rastausnehmung und einem korrespondierenden Rastvorsprung versehen, so dass die Flügelschrauben an den Anschlagelementen 54 einrasten, wenn sich die mittlere Lochplatte in ihrer zweiten Position befindet.

An den beiden Fußabschnitten 42 sind jeweils vier Löcher 57 ausgebildet. An einem der beiden Fußabschnitte sind im Bereich unmittelbar über den Löchern 57 jeweils ein Schieber 58 vorgesehen. Die Schieber 58 weisen jeweils ein Langloch auf, das an einem Ende entsprechend den Löchern 57 aufgeweitet ist. An der Rüttelstation 14 sind korrespondierende Stifte mit jeweils einem Kopf 60 vorgesehen, die durch die Löcher 57 passen. Beim Aufsetzen des Gestells 16 auf die Rüttelstation 14 werden die Köpfe 60 durch die Löcher 57 und den erweiterten Bereich der Langlöcher 59 hindurchgeführt und danach werden die Schieber 58 derart verschoben, dass der schmälere Bereich der Langlöcher 59 die Köpfe 60 hintergreift und das Gestell auf der Rüttelstation 14 fixiert ist. Die Löcher 57 des anderen Fußabschnittes 42 werden von entsprechend hakenförmigen Elementen durchgriffen, die an der Rüttelstation 14 ausgebildet sind. Hierdurch wird das Gestell 16 auf der Rüttelstation 14 derart fixiert, dass es auch bei den von der Rüttelstation ausgeführten Rüttelbewegungen sicher an der Rüttelstation gehalten wird.

Bei der in den Figuren 4a und 4b dargestellten Ausführungsform sind Anschlüsse 61 für die Schläuche 17 an der Stirnfläche des Thermoblocks 15 angeordnet. Im Bereich zwischen den Anschlüssen 61 befindet sich eine elektrische Leitung 62 zu einem im Thermoblock 15 angeordneten Temperatursensor.

Das Gestell 16 erlaubt die Vorbereitung einer Probenreihe außerhalb der Roboters 1, wobei eine Vielzahl von Reaktionsgefäßen am Gestell 16 angeordnet und daran fixiert werden können. Hierbei befindet sich die mittlere Lochplatte in ihrer ersten Position, in der deren Öffnungen mit den Öffnungen der oberen und unteren Lochplatte fluchten. Die Reaktionsgefäße werden dann zum Beispiel manuell in die Öffnungen 43 eingeführt. Die Öffnungen sind so bemessen, dass die Reaktionsgefäße 13 nicht durch die Öffnungen hindurch fallen können, sondern mit einem an den Reaktionsgefäßen 13 ausgebildeten Ringsteg 63 an der Oberseite der oberen Lochplatte 41 aufliegen. Sind alle Reaktionsgefäße 13 im Gestell 16 angeordnet, so wird die mittlere Lochplatte 45 in ihre zweite Position durch Drehen der Flügelschrauben 52 verbracht, wobei die Reaktionsgefäße 13 durch den Versatz der Öffnungen 43 der mittleren Lochplatte bezüglich der korrespondierenden Öffnungen 43 der oberen und unteren Lochplatte im Gestell festgeklemmt werden. Insbesondere drücken die Vorsprünge 50 sich etwas in das elastisch nachgebende Kunststoffmaterial der Reaktionsgefäße 13 ein, so dass neben dem klemmenden Reibschluss auch ein Formschluss zwischen dem Gestell 16 und den Reaktionsgefäßen 13 hergestellt wird. Die mittlere und untere Lochplatte 45, 44 sind vorzugsweise derart am Gestell 16 angeordnet, dass sie an einem Abschnitt 64 der Reaktionsgefäße 13 angreifen, an dem umlaufend vertikal verlaufende Rippen ausgebildet sind.

Das derart bestückte Gestell 16 kann einfach gehandhabt werden und auf der Rüttelstation 14 fixiert werden. Es ist auch möglich, dass das bestückte Gestell anderen Prozessschritten, wie z.B. einer Autoklavierung, zugeführt wird.

Das Gestell fixiert eine Vielzahl von Reaktionsgefäßen verdrehfest und in vertikaler Richtung. Hierdurch ist das Gestell sehr vorteilhaft in Verbindung mit dem Greifer einsetzbar, da große Kräfte, die beim Aufschieben des Greifers auf einen Deckel auf die Reaktionsgefäße und beim Abziehen eines Greifers von einem auf ein Reaktionsgefäß geschraubten Deckel ausgeübt werden, sicher und ohne Probleme für den Betrieb vom Gestell aufgenommen werden.

Zudem ist das Gestell sehr einfach ausgebildet und kann deshalb kostengünstig hergestellt werden. Ein weiterer Vorteil liegt darin, dass handelsübliche Reaktionsgefäße mit schraubbaren Deckel verwendet werden können.

Die Erfindung ist oben anhand eines Ausführungsbeispiels erläutert. Im Rahmen der Erfindung ist es auch möglich, dass anstelle der drei Stellschrauben 23 des Greifers 11 nach dem ersten Ausführungsbeispiel im Bodenbereich des Sackloches 29 ein konischer Kegel vorgesehen ist, an dessen Kegelfläche die Greifbacken mit ihrem oberen Bereich anliegen. Der Kegel ist an einer Gewindestange angeordnet, die im Greifer in einer vertikalen Gewindebohrung lagert. Durch Drehen der Gewindestange wird die vertikale Position des Kegels verändert und die Greifbacken um die Achsen 21 geschwenkt, wodurch der Aufnahmebereich justiert wird.

Gemäß einer weiteren Abwandlung der Erfindung können anstelle der oben beschriebenen Stelleinrichtungen 51 Schnellspannelemente vorgesehen werden, wie sie von Fahrradnaben bekannt sind.

Im Rahmen der Erfindung ist es auch möglich, dass der Roboter mehrere auf einer gemeinsamen horizontalen Schiene verlaufende Roboterarme aufweist.

### Bezugszeichenliste

- 1: Roboter
- 2: Arbeitsplattform
- 3: Rückwand
- 4: Roboterarm
- 5: Handhabungsarm
- 6: Handhabungsarm
- 7: Handhabungsarm
- 8: Pipettierspitze
- 9: Greifelement
- 10: Drehmechanismus
- 11: Greifer
- 12: Deckel
- 13: Reaktionsgefäß
- 14: Rüttelstation
- 15: Thermoblock
- 16: Gestell
- 17: Schläuche
- 18: Grundkörper
- 19: Nuten
- 20: Greifbacke
- 21: Achse
- 22: Federelement
- 23: Stellschraube
- 24: Symmetrieachse
- 25: Greiffläche
- 26: Anschlagsteg
- 27: Einführschräge
- 28: Schneidsteg
- 29: Sacklochbohrung
- 30: Fixierschraube
- 31: rohrförmiger Abschnitt
- 32: Schienenteil
- 33: Nut
- 34: Greifbacken
- 35: Federelement
- 36: Abstandselement
- 37: Greiffläche
- 38: Anschlagstufe
- 39: Einführschräge
- 40: Seitenwandung
- 41: Deckenwandung
- 42: Fußabschnitt
- 43: Öffnung
- 44: untere Lochplatte
- 45: mittlere Lochplatte
- 46: Stimkante
- 47: Längskante
- 48: Nase
- 49: Schlitz
- 50: Vorsprung
- 51: Stelleinrichtung
- 52: Flügelschraube
- 53: Schraube
- 54: Anschlagelement
- 55: Kontaktfläche
- 56: Kontaktfläche
- 57: Loch
- 58: Schieber
- 59: Langloch
- 60: Kopf
- 61: Anschluss
- 62: Leitung

## Patentansprüche

1. Vorrichtung zum automatischen Öffnen und Schließen von Reaktionsgefäßen umfassend
- eine Halteeinrichtung (16) zum verdrehsicheren Halten von zumindest einem Reaktionsgefäß (13),
- einen Greifer (11) zum Greifen eines Deckels (12) für das Reaktionsgefäß (13), wobei der Greifer (11) Greifbacken (20, 34) zum Umfassen des Deckels (12) aufweist,
- einen Drehmechanismus (10) zum drehbaren Halten des Greifers (11),
**dadurch gekennzeichnet,**
**dass** die Greifbacken (20, 34) derart angeordnet sind, dass beim Einführen des Dekkels (12) in den Bereich zwischen den Greifbacken (20, 34) dieser von den Greifbakken (20, 34) durch Reibschluss gehalten wird, und der Greifer (11) keine aktive Betätigungseinrichtung zum Öffnen und Schließen der Greifbacken (20, 34) aufweist.

2. Vorrichtung nach Anspruch 1,
**dadurch gekennzeichnet,**
**dass** die Greifbacken (20, 34) Einführschrägen (27, 39) aufweisen.

3. Vorrichtung nach Anspruch 1,
**dadurch gekennzeichnet,**
**dass** die Greifbacken (20, 34) an ihren Greifflächen (25, 37) zumindest einen quer zur Drehrichtung verlaufenden Schneidsteg (28) aufweisen.

4. Vorrichtung nach Anspruch 3,
**dadurch gekennzeichnet,**
**dass** die Höhe mit der der Schneidsteg (28) an der Greiffläche (25, 37) vorsteht kleiner als die Wandstärke der Reaktionsgefäße (13) ist und vorzugsweise nicht größer als 0,5 mm ist.

5. Vorrichtung nach einem der Ansprüche 1 bis 4,
**dadurch gekennzeichnet,**
**dass** die Halteeinrichtung (16) einen Klemmmechanismus zum klemmenden Halten von Reaktionsgefäßen (13) aufweist.

6. Vorrichtung nach einem der Ansprüche 1 bis 5,
**dadurch gekennzeichnet,**
**dass** die Halteeinrichtung (16) ferner drei übereinanderliegend angeordnete Lochplatten (41, 44, 45) aufweist, in welchen Öffnungen (43) zum Aufnehmen der Reaktionsgefäße (13) ausgebildet sind, wobei die obere und die untere Lochplatte (41, 44) ortsfest mit den darin ausgebildeten Öffnungen (43) zueinander fluchtend angeordnet sind, und die mittlere Lochplatte (45) verschieblich zwischen einer ersten Position, in der deren Öffnungen (43) mit den Öffnungen (43) der weiteren Lochplatten fluchten, und einer zweiten Position angeordnet ist, in der deren Öffnungen (43) zu den Öffnungen (43) der weiteren Lochplatten etwas versetzt angeordnet sind, so dass ein in die Öffnungen (43) der Lochplatten (41, 44, 45) eingebrachtes Reaktionsgefäß (13) geklemmt ist, und
**dass** Mittel (51) zum Fixieren der mittleren Lochplatte (45) in der zweiten Position vorgesehen sind.

7. Vorrichtung nach Anspruch 6,
**dadurch gekennzeichnet,**
**dass** die mittlere Lochplatte (45) nur in eine Richtung, der Verschieberichtung, verschieblich gelagert ist.

8. Vorrichtung nach Anspruch 7,
**dadurch gekennzeichnet,**
**dass** die Öffnungen (43) in Verschieberichtung eine größere Weite aufweisen als quer zur Verschieberichtung.

9. Vorrichtung nach Anspruch 7 oder 8,
**dadurch gekennzeichnet,**
**dass** an der mittleren Lochplatte (45) an den Öffnungen (43) jeweils ein in den Innenbereich der Öffnungen (43) vorstehender Vorsprung (50) ausgebildet ist, der am Schnittbereich zwischen einer in Verschieberichtung verlaufenden Mittellinie der jeweiligen Öffnung (43) und dem Rand der Öffnung (43) angeordnet ist.

10. Vorrichtung nach Anspruch 9,
**dadurch gekennzeichnet,**
**dass** an der oberen und/oder unteren Lochplatte (41, 44) an den Öffnungen (43) jeweils ein in den Innenbereich der Öffnungen (43) vorstehender Vorsprung (50) ausgebildet ist, der zu den Vorsprüngen (50) der mittleren Lochplatte (45) diametral gegenüberliegend angeordnet ist.

11. Vorrichtung nach einem der Ansprüche 6 bis 10,
**dadurch gekennzeichnet,**
**dass** Mittel zum Bewegen und Fixieren (51) der mittleren Lochplatte (45) in der zweiten Position vorgesehen sind.

12. Roboter mit
- einer Arbeitsplattform (2),
- einem oder mehreren Handhabungsarmen (5, 6, 7),
**gekennzeichnet durch** eine Vorrichtung nach einem der Ansprüche 1 bis 11, wobei ein Handhabungsarm (7) mit dem Drehmechanismus (10) zum drehbaren Halten des Greifers (11) versehen ist.

13. Roboter nach Anspruch 12,
**dadurch gekennzeichnet,**
**dass** auf der Arbeitsplattform eine Aufnahme zum verdrehsicheren Aufnehmen der Halteeinrichtung (16), bspw. mittels einer Fixiereinrichtung, vorgesehen ist.

## Claims

1. Device for the automatic opening and closing of reaction vessels, comprising:
- a holding device (16) for the non-rotatable holding of one or more reaction vessels (13)
- a gripper (11) for the gripping of a lid (12) for the reaction vessel (13), wherein the gripper (11) has gripping jaws (20, 34) to take hold of the lid (12), and
- a rotating mechanism (10), for rotatable holding of the gripper (11),
**characterised in that**
the gripping jaws (20, 34) are arranged in such a way that, when the lid (12) is inserted into the area between the gripping jaws (20, 34), it is held by the gripping jaws (20, 34) through frictional contact, and the gripper (11) has no active operating device for opening and closing the gripping jaws (20, 34).

2. Device according to claim 1,
**characterised in that**
the gripping jaws (20, 34) have insertion slopes (27, 39).

3. Device according to claim 1,
**characterised in that**
the gripping jaws (20, 34) have on their gripping surfaces (25, 37) one or more cutting webs (28) running at right-angles to the direction of rotation.

4. Device according to claim 3,
**characterised in that**
the height by which the cutting web (28) projects beyond the gripping surface (25, 37) is less than the wall thickness of the reaction vessels (13) and preferably not greater than 0.5 mm.

5. Device according to any of claims 1 to 4,
**characterised in that**
the holding device (16) has a clamping mechanism to clamp and hold the reaction vessels (13).

6. Device according to one of the claims 1 to 5
**characterised in that**
the holding device (16) also has three perforated plates (41, 44, 45), arranged one above the other, and with openings (43) to hold the reaction vessels (13),wherein the top and bottom perforated plates (41, 44) are arranged so as to be stationary, with the openings (43) made in them flush with one another, and the middle perforated plate (45) is designed to slide between a first position in which its openings (43) are aligned with the openings of the other perforated plates, and a second position in which its openings (43) are arranged somewhat offset relative to the openings (43) of the other perforated plates, so that a reaction vessel (13) inserted in the openings (43) of the perforated plates (41, 44, 45) is clamped, and
that means (51) of fixing the middle perforated plate (45) in the second position are provided.

7. Device according to claim 6,
**characterised in that** the middle perforated plate (45) is mounted so as to slide in only one direction, the direction of sliding.

8. Device according to claim 7,
**characterised in that**
the openings (43) in the direction of sliding are wider than those at right-angles to the direction of sliding.

9. Device according to claim 7 or 8,
**characterised in that**
each of the openings (43) of the middle perforated plate (45) contains a projection (50) which extends into the interior of the opening (43) and is located roughly in the section area between a centre line of the opening (43) concerned running in the direction of sliding, and the edge of the opening (43).

10. Device according to claim 9,
**characterised in that**
each of the openings (43) of the top and/or bottom perforated plate (41, 44) contains a projection (50) which extends into the interior of the opening (43) and is arranged diametrically opposite the projections (50) of the middle perforated plate (45).

11. Device according to any of claims 6 to 10,
**characterised in that**
means for moving and fixing (51) the middle perforated plate (45) in the second position are provided.

12. Robot with
- a work platform (2)
- one or more handling arms (5, 6, 7)
**characterised by** a device according to any of claims 1 to 11, wherein one handling arm (7) is provided with the rotating mechanism (10) for rotatable holding of the gripper (11).

13. Robot according to claim 12,
**characterised in that**
there is provided on the work platform a mount for non-rotatable mounting of the holding device (16), for example by means of a locating device.

## Revendications

1. Dispositif d'ouverture et de fermeture automatique de récipients de réaction, comportant
- un dispositif de retenue (16) pour retenir au moins un récipient de réaction (13) sans possibilité de rotation,
- un préhenseur (11) pour saisir un couvercle (12) pour le récipient de réaction (13), le préhenseur (11) présentant des mâchoires de préhension (20, 34) pour entourer le couvercle (12),
- un mécanisme de rotation (10) pour retenir en rotation le préhenseur (11),
**caractérisé en ce que**
les mâchoires de préhension (20, 34) sont agencées de telle sorte que lorsqu'on introduit le couvercle (12) dans la région entre les mâchoires de préhension (20, 34), celui-ci est maintenu par coopération de friction par les mâchoires de préhension (20, 34), et le préhenseur (11) ne présente aucun dispositif d'actionnement pour l'ouverture et la fermeture des mâchoires de préhension (20, 34).

2. Dispositif selon la revendication 1, **caractérisé en ce que** les mâchoires de préhension (20, 34) présentent des pentes d'introduction (27, 39).

3. Dispositif selon la revendication 1, **caractérisé en ce que** les mâchoires de préhension (20, 34) présente sur leurs surfaces de préhension (25, 37) au moins une barrette coupante (28) s'étendant transversalement au sens de rotation.

4. Dispositif selon la revendication 3, **caractérisé en ce que** la hauteur avec laquelle la barrette coupante (28) fait saillie sur la surface de préhension (25, 37) est inférieure à l'épaisseur de paroi des récipients de réaction (13) et n'est de préférence pas supérieure à 0,5 mm.

5. Dispositif selon l'une des revendications 1 à 4, **caractérisé en ce que** le dispositif de retenue (16) présente un mécanisme de serrage pour retenir par serrage des récipients de réaction (13).

6. Dispositif selon l'une des revendications 1 à 5, **caractérisé en ce que** le dispositif de retenue (16) présente en outre trois plaques perforées (41, 44, 45) agencées les unes au dessus des autres, dans lesquelles sont réalisées des ouvertures (43) pour recevoir les récipients de réaction (13), la plaque perforée supérieure (41) et la plaque perforée inférieure (44) étant agencées stationnaires avec les ouvertures (43) réalisées dans celles-ci en alignement les unes avec les autres, et la plaque perforée médiane (45) étant agencée de manière déplaçable entre une première position dans laquelle ses ouvertures (43) sont en alignement avec les ouvertures (43) des autres plaques perforées et une deuxième position dans laquelle ses ouvertures (43) sont agencées un peu en décalage par rapport aux ouvertures (43) des autres plaques perforées, de telle sorte qu'un récipient de réaction (13) introduit dans les ouvertures (43) des plaques perforées (41, 44, 45) est serré, et
**en ce que** des moyens (51) sont prévus pour fixer la plaque perforée médiane (45) dans la deuxième position.

7. Dispositif selon la revendication 6, **caractérisé en ce que** la plaque perforée médiane (45) n'est montée à déplacement que dans une direction qui est la direction de déplacement.

8. Dispositif selon la revendication 7, **caractérisé en ce qu'**en direction de déplacement, les ouvertures (43) présentent une largeur plus grande que transversalement à la direction de déplacement.

9. Dispositif selon la revendication 7 ou 8, **caractérisé en ce que** sur la plaque perforée médiane (45), au niveau de chaque ouverture (43) est réalisée une saillie (50) faisant saillie dans la région intérieure des ouvertures (43), laquelle est agencée dans la région d'intersection entre une ligne médiane s'étendant en direction de déplacement de l'ouverture (43) respective et le bord de l'ouverture (43).

10. Dispositif selon la revendication 9, **caractérisé en ce que** sur la plaque perforée supérieure (41) et/ou sur la plaque perforée inférieure (44), au niveau des ouvertures (43) est réalisée une saillie (50) faisant saillie dans la région intérieure des ouvertures (43), laquelle est agencée diamétralement à l'opposé des saillies (50) de la plaque perforée médiane (45).

11. Dispositif selon l'une des revendications 6 à 10, **caractérisé en ce qu'**il est prévu des moyens pour déplacer et fixer (51) la plaque perforée médiane (45) dans la deuxième position.

12. Robot comportant
- une plateforme de travail (2),
- un ou plusieurs bras de manipulation (5, 6, 7),
**caractérisé par** un dispositif selon l'une des revendications 1 à 11, un bras de manipulation (7) étant pourvu du mécanisme de rotation (10) pour maintenir en rotation le préhenseur (11).

13. Robot selon la revendication 12, **caractérisé en ce que** sur la plateforme de travail est prévu un logement pour recevoir avec antirotation le dispositif de retenue (16), par exemple au moyen d'un dispositif de fixation.
